# EUROPEAN PATENT SPECIFICATION

(11) **EP 4 530 539 B1**
(45) Date of publication and mention of the grant of the patent: **25.03.2026**
(21) Application number: 23200201.4
(22) Date of filing: 27.09.2023
(51) Int. Cl.: F24C 15/20, F24C 15/00, F24C 15/32, B64D 11/04

(54) **OVEN COMPRISING STEAM SEPARATION AND CONDENSATE RECIRCULATION SYSTEM**
OFEN MIT DAMPFABSCHEIDUNGS- UND KONDENSATRÜCKFÜHRUNGSSYSTEM
FOUR COMPRENANT UN SYSTÈME DE SÉPARATION DE VAPEUR ET DE RECIRCULATION DE CONDENSAT

(43) Date of publication of application: 02.04.2025
(73) Proprietor: B/E Aerospace, Inc., Winston-Salem, NC 27105 (US)
(72) Inventor: PANJER, Frederik Adrian Stephan, 3953 BW Maarsbergen (NL)
(74) Representative: Dehns

(56) References cited:
- EP-A1- 3 081 279
- DE-A1- 102005 047 454
- DE-A1- 2 649 528

## Description

### TECHNICAL FIELD

The present invention relates to an oven for use in an aircraft galley. A further aspect concerns a method of operating such an oven.

### BACKGROUND

Preparation, and particularly heating, of food items often makes use of an oven, wherein the food items are heated to a desired temperature. Ovens vary in design and may utilise one or more of infrared, microwave and conduction heating. The moisture content of the air inside an oven may be selected to configure the conduction capabilities of the air inside the oven and the amount of moisture imparted onto food items. Even ovens without specific moisture generating features will often contain significant levels of steam originating from evaporation of moisture-containing food products heated therein. Regulation of moisture and pressure in ovens is important to maintain desired cooking conditions or for safety considerations. For this reason, ovens often comprise an air outlet, through which pressurised and moist air can escape the heating chamber. One of the problems with this is that, in certain environments where an oven is required, the presence of excess moist air, steam, or condensed water in the environment external to the oven is highly undesirable. For example, too much steam may impact increase the humidity of the air in a controlled environment beyond permitted thresholds. Liquid water from condensation of the steam after exiting the oven can also lead to a multitude of problems, for example when coming into contact with sensitive equipment, reducing its longevity or compromising its function. These problems are particularly pertinent to the use of galley ovens on board aircraft. One proposed means of removing water vapour from a flow of steam or humid air has been to position a cyclone steam separator in the flow path thereof. Cyclone steam separators are advantageous in that they do not require a power source. However, for some ovens, which operate at relatively low pressures, such separators are not, alone, a viable solution for removing water vapour from their outflow. This is because, for cyclone steam separators to function effectively, they must be placed into an airstream with a high air speed such that a high air pressure differential is present across the separator. In ovens with a relatively low outflow pressure, the cyclone steam separator would fail to remove sufficient water vapour from the outflow. The present invention aims to address this particular problem. DE102005047454A1 relates to a heated apparatus for cooking foodstuffs on baking trays. EP3081279A1 relates to an air purification apparatus and method. DE2649528A1 relates to an electric stove for household use.

### SUMMARY

An oven for use in an aircraft galley is provided and comprises an inner cavity configured to heat one or more food items, the inner cavity comprising an air outlet configured to allow a flow of air and steam to escape the inner cavity; an exhaust conduit connected, at a first end, to the air outlet external to the inner cavity and configured to channel the flow of air and steam leaving the inner cavity via the air outlet; a cyclone steam separator configured to reduce the water and/or water vapour content of a flow of moist air flowing through it, the cyclone steam separator comprising a cyclone steam separator inlet and a cyclone steam separator outlet; wherein the exhaust conduit is connected, at a second end, opposite the first end, to the cyclone steam separator inlet, and is configured to receive the flow of air and steam channeled by the exhaust conduit; an exhaust fan configured to inject pressurised air into the exhaust conduit at a point between the air outlet and the cyclone steam separator inlet.

A one-way valve may be positioned between the point of injection of pressurised air into the exhaust conduit by the exhaust fan and the inner cavity; wherein said one-way valve is configured to allow the flow of air and steam to travel from the inner cavity to the cyclone steam separator and to prevent air flowing into the inner cavity.

An outlet valve may be provided on the exhaust conduit between the air outlet and the point of injection of pressurised air into the exhaust conduit by the exhaust fan; wherein said outlet valve is configured to control the flow of air and steam exiting the inner cavity.

The oven may comprise an interior fan disposed within the inner cavity and a main oven motor disposed external to the inner cavity; wherein said interior fan is connected to and configured to be driven by the main oven motor.

The exhaust fan may comprise and be configured to be driven by a dedicated motor.

The dedicated motor may comprise and be configured to be controlled by electronics configured to adjust the operating power of the exhaust fan based on information relating to the speed of the flow of air and steam exiting the inner cavity through the air inlet.

The exhaust fan may be connected to and configured to be driven by the main oven motor.

According to the invention, the cyclone steam separator comprises a water outlet configured to channel water collected from the flow of air and steam by the cyclone steam separator out of the cyclone steam separator; and wherein a water conduit is provided connected, at a first end, to the water outlet and configured to channel water from the water outlet.

The inner cavity is provided with a water inlet configured to allow water to enter the inner cavity; and wherein the water conduit is connected, at a second end, to the water inlet and configured to channel water into the inner cavity via the water inlet.

At a point between the water inlet and the water outlet, the water conduit may be provided with a water return valve configured to control the flow of water through the water conduit into the inner cavity.

At a point between the water inlet and the water outlet, the water conduit may be provided with a water collection tank configured to collect and store a volume of water originating from the cyclone steam separator.

The oven may comprise oven electronics and the exhaust fan may further be configured to induce a flow of air across said oven electronics in order to cool said oven electronics.

The oven may comprise oven electronics and a cooling fan; wherein the cooling fan comprises a cooling fan outlet connected at a first end to the cooling fan and at a second end to the exhaust conduit between the air outlet and the cyclone steam separator; wherein said cooling fan outlet is configured to channel pressurised air from the cooling fan to the exhaust conduit between the air outlet and the cyclone steam separator.

A method of operating the oven as provided is also provided and comprises the steps of heating and providing moisture to the inner cavity such that the inner cavity comprises an air and steam mixture at a higher pressure than the pressure of the environment external to the oven; allowing the air and steam to flow from the inner cavity into the exhaust conduit; injecting, via the exhaust fan, pressurised air into the flow of air and steam; and reducing, using the cyclone steam separator, the water and/or water vapour content of the flow of air and steam.

The method further comprises channeling water separated from the flow of air and steam from the cyclone steam separator into the inner cavity.

### BRIEF DESCRIPTION OF THE DRAWINGS

Figure 1 illustrates a known oven.
Figures 2A and 2B illustrate a known cyclone steam separator.
Figure 3 illustrates an oven according to the present disclosure comprising a cyclone steam separator and an exhaust fan.
Figure 4 illustrates an oven according to the present disclosure comprising a cyclone steam separator and an exhaust fan driven by the main oven motor.
Figure 5 illustrates an oven according to the present disclosure comprising a cyclone steam separator and a conduit for returning water collected by the separator back to the inner cavity of the oven.
Figure 6 illustrates an oven according to the present disclosure wherein an integrated exhaust fan is used to generate a flow of cooling air over the oven electronics.
Figure 7 illustrates an oven according to the present disclosure which makes use of an oven electronics cooling fan to increase the pressure in the exhaust conduit.

### DETAILED DESCRIPTION

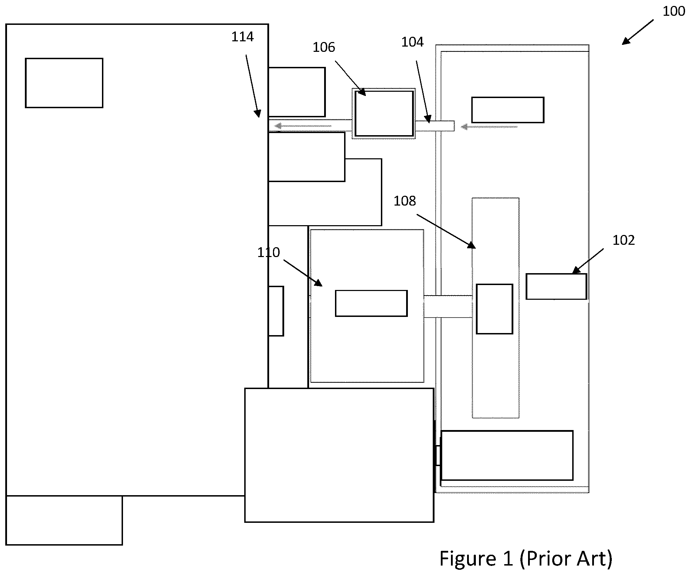

Figure 1 illustrates a known oven 100, which may be suitable for use on board an aircraft. The oven comprises an inner cavity, or heating chamber, 102, in which food items may be heated. Means for heating the inner cavity 102 are also provided, although not shown. The oven 100 may also comprise a fan 108, driven by a motor 108, which may aid conduction heating within the inner cavity 102. Such known ovens 100 may also comprise means for generating steam within the inner cavity 100, although these are not shown in Figure 1. The oven 100 comprises an air outlet 104 configured to channel air from the inner cavity 102. An outlet valve 106 may also be provided to provide control over the flow of air from the inner cavity 102. Under normal operation, as the temperature in the inner cavity 102 rises through heating, the pressure in the inner cavity 102 rises and pressurised air therein is vented through the air outlet 104. Air from the inner cavity 102 flows through the air outlet 104 by virtue of this air being at a higher pressure than the air outside the inner cavity 102. The air leaving the air outlet 104 typically has a high steam or water content. Since the oven shown in Figure 1 does not comprise any means to remove steam or water from the air leaving the inner cavity 102, significant levels of steam and/or water are exhausted through air exhaust 114 into the environment external to the oven 100.

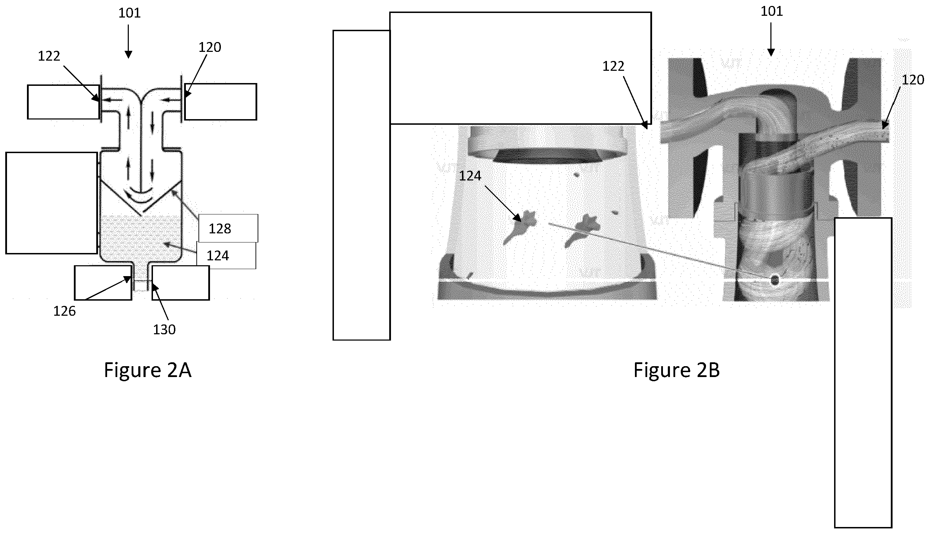

A number of means of separating water or steam from, or otherwise reducing the humidity of, an airstream are known in the art. One particularly advantageous means of achieving this is a cyclone steam separator. Cyclone steam separators provide a way to separate water and water vapour from an airstream without the need for a power supply or complex components. An example cyclone steam separator 101 is illustrated in Figures 2A and 2B. The cyclone steam separator 101 is configured to be placed into an airstream between points 120 and 122 such that the airstream is channeled through the cyclone steam separator 101 from point 120 to point 122. The cyclone steam separator 101 causes the airstream to flow rotationally within the separator 101. Due to the difference in specific gravities of the water or water vapour and the air, the water or water vapour is separated from the air and condensed water 124 therefrom hits the inner wall of the separator 101 and is drawn by gravity down baffles 128 away from the airstream. Such cyclone steam separators 101 may comprise a water reservoir and/or a valve 130 for controlling the outflow of water 101 from the separator 101. Such cyclone steam separators 101 also comprise a water outlet 126 configured to allow water collected from the airstream to leave the separator.

Whilst cyclone steam separators provide a useful and efficient way of removing water and/or water vapour from an airstream, they generally require a minimum airstream speed therethrough to function effectively. Some ovens do not operate at very high pressures in their heating cavities. Because of this, the speed of the airstream leaving the heating cavities in such ovens through the air outlets is not sufficient for effective water or water vapour removal therefrom using a cyclone steam separator alone.

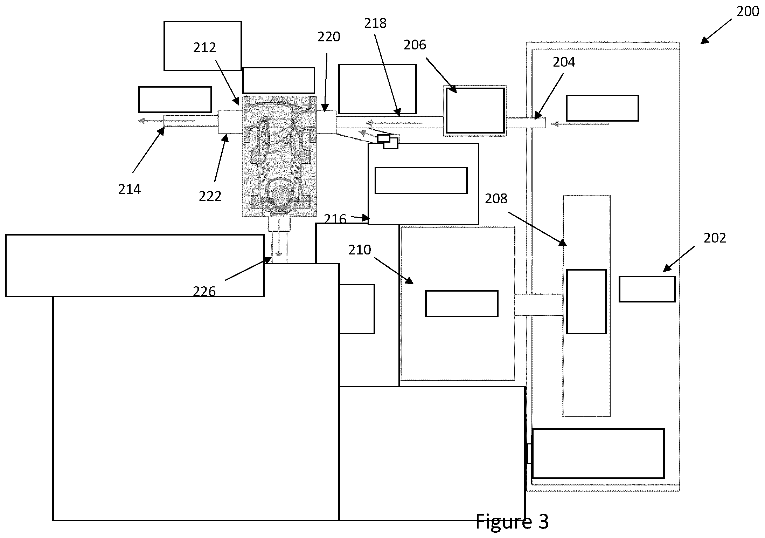

Figure 3 illustrates an embodiment of this disclosure which solves the problem of how to reduce water or water vapour content from an airstream flowing from an oven as described in the previous paragraph. The oven 200 comprises an inner cavity 202 in which food items may be placed. Means for heating the inner cavity 202 or heating the food items placed within the inner cavity 202 are also provided, although not shown. The oven 200 may comprise an interior fan 208 configured to circulate air around the inner cavity 202. The interior fan 208 may be powered by a main oven motor 210 external to the inner cavity 202. An air outlet 204 is provided in the inner cavity 202, configured to allow outflow of pressurised air and steam from the inner cavity 202 to an exhaust conduit 218. The exhaust conduit 218 may comprise an outlet valve 206 proximate the air outlet 204, configured to allow control of the air/steam flow out of the heating cavity 202. The outlet valve 206 may be a normally open valve. Downstream from the air outlet 204 and the outlet valve 206, if provided, is positioned a cyclone steam separator 212. The cyclone steam separator 212 is arranged such that the airstream from the inner cavity 202 of the oven 200 flows down the exhaust conduit 218 and into the inlet 220 of the cyclone steam separator 212. The cyclone steam separator 212, upon receipt of a water- and/or water vapour-containing airstream of a sufficient airspeed through inlet 220, is configured to separate water and/or water vapour from said airstream and channel the airstream through the cyclone steam separator outlet 222. As already noted, if the airspeed of the airstream is sufficient, the airstream exiting the cyclone steam separator 212 through outlet 222 will have a lower water and/or water vapour content than the airstream entering the separator 212 through inlet 220. Since the airspeed of the airstream exiting the inner cavity 202 of the oven at air outlet 204 may not be sufficient for this to happen, an exhaust fan 216 is provided. The exhaust fan 216 is operable to feed pressurised air into the exhaust conduit 218 downstream from the air inlet 204, and outlet valve 206, if provided. As will be appreciated, the injection of pressurised air from the exhaust fan 216 into the exhaust conduit 218 will increase the pressure differential of the airstream across the inlet 220 and outlet 222 of the cyclone steam separator 212. This results in an increase in the speed of the airstream through the separator 212. The exhaust conduit 218 may be provided with a one way valve (not shown) positioned between the output of the exhaust fan 216 into the exhaust conduit and the air outlet 204, configured to prevent pressurised air from flowing back into the oven inner cavity 202. After passing through the cyclone steam generator 212, the airstream, with lower water and/or water vapour content, is exhausted into the environment external to the oven 200 via air exhaust 214. The water separated from the airstream exits the cyclone steam separator 212 through water outlet 226.

The exhaust fan 216 can be configured to increase the airstream speed through the cyclone steam separator 212 by a predetermined amount such that a desired level of water and/or water vapour separation is achieved by the separator 212. It is also contemplated that the exhaust fan 216 be driven by a dedicated motor (not shown). In such a case, the motor may be controlled by electronics configured to receive an input containing information as to the airspeed of the airstream passing through the air inlet 204 and adjust the exhaust fan power, i.e. its imparted air pressure on the exhaust conduit 218, based thereon. Said information can be provided by a sensor configured to measure and transmit information relating to the airspeed of the airstream exiting the air inlet (204) from the inner cavity (202). The electronics can be configured to cause the motor to drive the exhaust fan 216 to a degree needed to raise the speed of the airstream through the cyclone steam separator 212 enough to provide sufficient water and/or water vapour separation, but not in excess of this. This may reduce the necessary power consumption of the exhaust fan 216 and oven 200 as a whole.

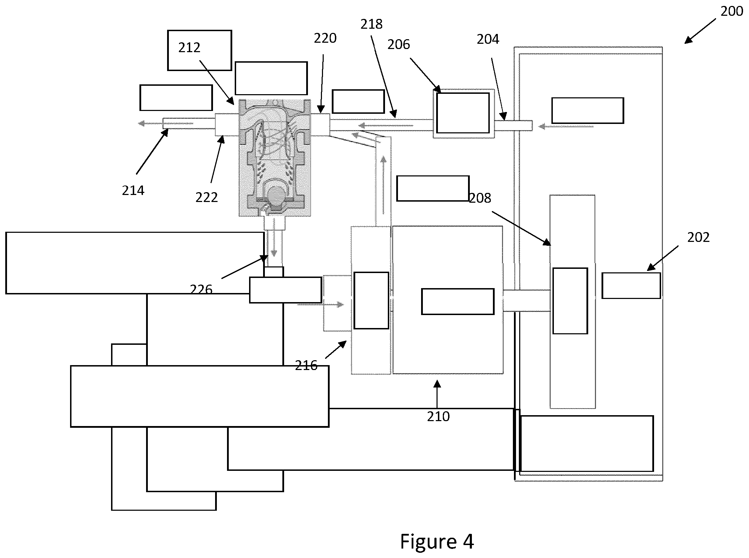

Although the exhaust fan 216 may be provided with a dedicated motor, it is also contemplated, as illustrated in Figure 4, that the exhaust fan 216 may be driven by the same main oven motor 210 that drives the interior fan 208. In such embodiments, as shown in Figure 4, wherein the oven 200 comprises an interior fan 208 and a main oven motor 210 configured to drive said interior fan 208, the exhaust fan 216 may be integrated with the main oven motor 210 such that the main oven motor drives both the interior fan 208 and the exhaust fan 216. This simplifies the system as compared with using a separately powered exhaust fan 216 and may also improve efficiency in comparison thereto. Aside from the integration of the exhaust fan 216 with the main oven motor 210, the embodiment shown in Figure 4 is as described with respect to Figure 3.

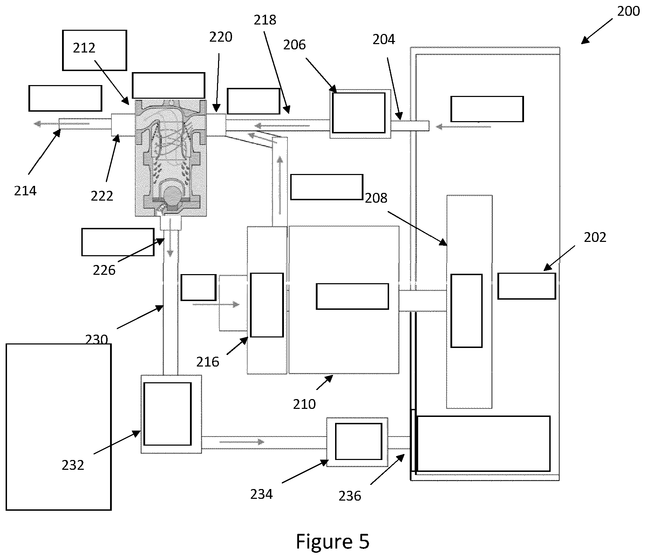

Figure 5 illustrates another embodiment of the disclosure. Although the oven 200 is illustrated as comprising an exhaust fan 216 integrated with the main oven motor 210, which drives the interior fan 208, it is to be understood that the exhaust fan 216 of this embodiment may also be provided separately to the main oven motor 210, and may be provided with its own dedicated motor and/or electronics as described in relation to Figure 3. As shown in Figure 5, the cyclone steam separator 212 is provided with a water outlet 226. The water outlet 226 is configured to channel water from the cyclone steam separator 212 to a water conduit 230. The water conduit 230 may be configured with the oven to channel water therethrough using gravity. The water conduit 230 may comprise a water collection tank 232 positioned on its length, configured to hold a volume of water. From the water collection tank 232, or otherwise directly from the water outlet 226 of the cyclone steam separator, the water conduit is configured to channel water back into the inner cavity 202 of the oven 200 through water inlet 236. A water return valve 234 may be positioned proximate the water inlet 236 configured to control the flow of water from the water conduit 230 into the inner cavity 202. The water return valve 234 may be a normally closed valve. Providing the water conduit 230 allows water separated from the airstream leaving the inner cavity 202 through air outlet 204 to be recycled back into the inner cavity 202, where it is converted to steam by the high temperatures in the inner cavity 202. This solves the problem of disposal of the water collected and output from the cyclone steam separator 212 and precludes the need to inject fresh water into the inner cavity 202 to maintain desired humidity/steam levels therein. This is of course in addition to the advantage provided by this system of reducing the water and/or water content of air exhausted from the air exhaust 214 into the environment external to the oven 200. The water conduit 230, water collection tank 232, water return valve 234 and water inlet 236 may be provided in any combination to any of the aforementioned embodiments.

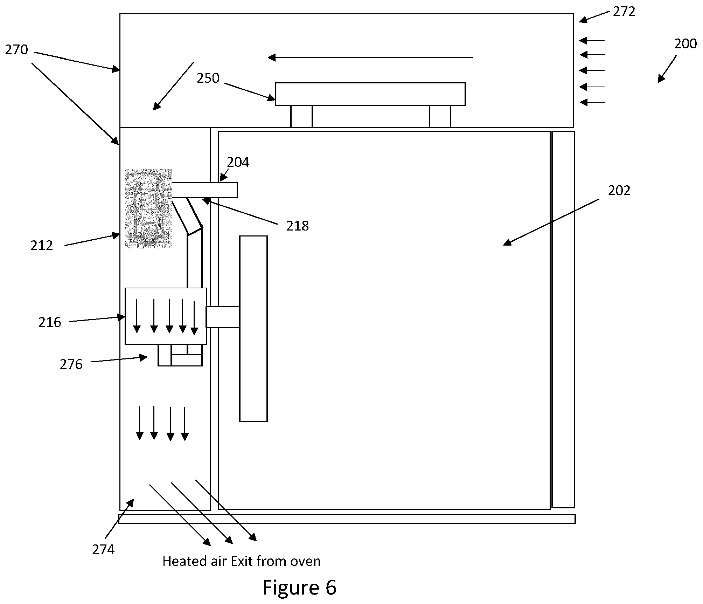

Figure 6 illustrates an oven which may be any oven as previously described where the exhaust fan 216 is integrated with, and powered by, the main oven motor 210, such as illustrated in Figure 4. As shown in Figure 6, the oven comprises oven electronics 250 located within a cooling channel 270. The cooling channel 270 has an inlet 272, which may be at a front end of the oven 200, and an outlet 274, which may be at the back, or bottom, of the oven 200. In this embodiment, the integrated exhaust fan 216 is located within the cooling channel 270 between the inlet 272 and the outlet 274. The exhaust fan 216 is configured to create a pressure differential between the inlet 272 of the cooling channel 270 and the outlet 274 of the cooling channel 270 such that cool air is drawn into the cooling channel 270 from the inlet 272, passes over and cools the oven electronics 250 and exits the cooling channel 270 through the outlet 274. As also illustrated in the figure, the exhaust fan 216 serves a second purpose, that is, to inject pressurised air, via exhaust fan conduit 276, into the exhaust conduit 218 in order to increase the pressure in the exhaust conduit 218 to increase the speed of the airstream through the cyclone steam separator 212. Provided the exhaust fan 216 is supplied with sufficient power, both the cooling of the oven electronics 250 and the effective removal of water and/or water vapour from the airstream can be achieved therewith. This obviates the need for a second fan or cooling system for cooling the oven electronics 250. In order to achieve greater cooling efficiency, the cooling channel 270 may be air tight between its inlet 272 and outlet 274.

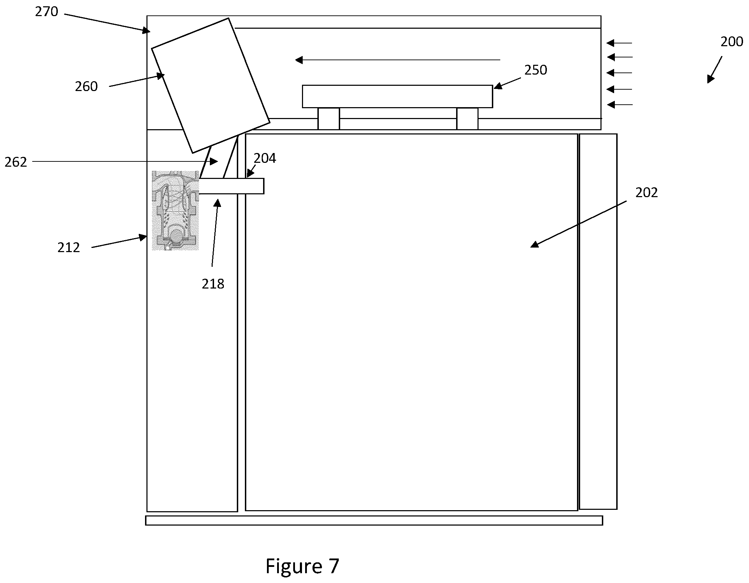

Figure 7 illustrates an oven 200 which may be any of the ovens 200 described in relation to Figures 3 to 6. In this oven 200, in addition to the exhaust fan 216, the oven 200 is provided with a cooling fan 260, which is configured to cool the oven electronics 250 located in the cooling channel 270. The cooling fan 260 is configured to draw in cool external air via the cooling channel inlet 272, which may be located at the front of the oven 200, to create a flow of cooling air, flowing past the oven electronics 250. The air, having passed over the oven electronics, 250 is then channeled towards an outlet (not shown) of the cooling channel 270 downstream of the cooling fan 260, which may be located at the back or bottom of the oven 200. To serve its second purpose, the cooling fan is provided with a cooling fan outlet 262. The cooling fan outlet 262 is configured to channel some of the air pressurised in the cooling fan 260. The cooling fan outlet 262 is connected at one end to the cooling fan 260 and at the other end to the exhaust conduit 218 between the cyclone steam separator 212 and the air outlet 204. This cooling fan outlet 262 serves largely the same purpose as the exhaust fan 216 of the previously described embodiments, in that it increases the pressure in the exhaust conduit 218 before the cyclone steam separator 212 in order to increase the speed of the flow of the airstream through the separator 212. For this reason, provided the air output from the cooling fan 260 through the cooling fan outlet 262 is sufficiently high, the cooling fan 260 can replace the exhaust fan 216 in the previously described embodiments to reduce the envelope and complexity of the oven 200, whilst providing function for both cooling of oven electronics 250 and removal of water and/or water vapour from the oven inner cavity exhaust. Otherwise, the cooling fan outlet 262 configuration can be implemented in addition to the exhaust fan 216 in order to reduce power demand on the exhaust fan 216 or to increase the maximum pressure in the exhaust conduit 218 and therefore the speed of the airstream through the cyclone steam separator 212.

Although this disclosure has been described in terms of preferred examples, it should be understood that these examples are illustrative only and that the claims are not limited to those examples. The scope of the invention is defined by the appended claims.

## Claims

1. An oven (200) for use in an aircraft galley, comprising:
an inner cavity (202) configured to heat one or more food items, the inner cavity (202) comprising an air outlet (204) configured to allow a flow of air and steam to escape the inner cavity;
an exhaust conduit (218) connected, at a first end, to the air outlet (204) external to the inner cavity (202) and configured to channel the flow of air and steam leaving the inner cavity (202) via the air outlet (204);
a cyclone steam separator (212) configured to reduce the water and/or water vapour content of a flow of moist air flowing through it, the cyclone steam separator (212) comprising a cyclone steam separator inlet (220) and a cyclone steam separator outlet (222); wherein the exhaust conduit (218) is connected, at a second end, opposite the first end, to the cyclone steam separator inlet (220), and is configured to receive the flow of air and steam channeled by the exhaust conduit (218), **characterized in that** the oven further comprises
an exhaust fan (216) configured to inject pressurised air into the exhaust conduit (218) at a point between the air outlet (204) and the cyclone steam separator inlet (220);
wherein the cyclone steam separator (212) comprises a water outlet (226) configured to channel water collected from the flow of air and steam by the cyclone steam separator (212) out of the cyclone steam separator (212); and wherein a water conduit (230) is provided connected, at a first end, to the water outlet (226) and configured to channel water from the water outlet (226); and
wherein the inner cavity (202) is provided with a water inlet (236) configured to allow water to enter the inner cavity (202); and wherein the water conduit (230) is connected, at a second end, to the water inlet (236) and configured to channel water into the inner cavity (202) via the water inlet (236).

2. The oven of claim 1, wherein a one-way valve is positioned between the point of injection of pressurised air into the exhaust conduit (218) by the exhaust fan (216) and the inner cavity (202); wherein said one-way valve is configured to allow the flow of air and steam to travel from the inner cavity (202) to the cyclone steam separator (212) and to prevent air flowing into the inner cavity (202).

3. The oven of claim 1 or 2, wherein an outlet valve (206) is provided on the exhaust conduit (218) between the air outlet (204) and the point of injection of pressurised air into the exhaust conduit (218) by the exhaust fan (216); wherein said outlet valve (206) is configured to control the flow of air and steam exiting the inner cavity (202).

4. The oven of any preceding claim, wherein the oven (200) comprises an interior fan (208) disposed within the inner cavity (202) and a main oven motor (210) disposed external to the inner cavity (202); wherein said interior fan (208) is connected to and configured to be driven by the main oven motor (210).

5. The oven of any preceding claim, wherein the exhaust fan (216) comprises and is configured to be driven by a dedicated motor.

6. The oven of claim 5, wherein the dedicated motor comprises and is configured to be controlled by electronics configured to adjust the operating power of the exhaust fan (216) based on information relating to the speed of the flow of air and steam exiting the inner cavity (202) through the air inlet (204).

7. The oven of claim 4, wherein the exhaust fan (216) is connected to and configured to be driven by the main oven motor (210).

8. The oven of any preceding claim, wherein, at a point between the water inlet (236) and the water outlet (226), the water conduit (230) is provided with a water return valve (234) configured to control the flow of water through the water conduit (230) into the inner cavity (202).

9. The oven of any preceding claim, wherein, at a point between the water inlet (236) and the water outlet (226), the water conduit (230) is provided with a water collection tank (232) configured to collect and store a volume of water originating from the cyclone steam separator (212).

10. The oven of any preceding claim, wherein the oven (200) comprises oven electronics (250) and the exhaust fan (216) is further configured to induce a flow of air across said oven electronics (250) in order to cool said oven electronics (250).

11. The oven of any of claims 1 to 9, wherein the oven (200) comprises oven electronics (250) and a cooling fan (260); wherein the cooling fan (260) comprises a cooling fan outlet (262) connected at a first end to the cooling fan (260) and at a second end to the exhaust conduit (218) between the air outlet (204) and the cyclone steam separator (212); wherein said cooling fan outlet (262) is configured to channel pressurised air from the cooling fan (260) to the exhaust conduit (218) between the air outlet (204) and the cyclone steam separator (212).

12. A method of operating the oven (200) of claim 1, comprising:
heating and providing moisture to the inner cavity (202) such that the inner cavity (202) comprises an air and steam mixture at a higher pressure than the pressure of the environment external to the oven;
allowing the air and steam to flow from the inner cavity (202) into the exhaust conduit (218);
injecting, via the exhaust fan (218), pressurised air into the flow of air and steam; and reducing, using the cyclone steam separator (212), the water and/or water vapour content of the flow of air and steam; further comprising:
channeling water separated from the flow of air and steam from the cyclone steam separator (212) into the inner cavity (202).

## Patentansprüche

1. Ofen (200) zur Verwendung in einer Luftfahrzeugbordküche, umfassend:
einen Innenraum (202), der dazu konfiguriert ist, ein oder mehrere Lebensmittel zu erhitzen, wobei der Innenraum (202) einen Luftauslass (204) umfasst, der dazu konfiguriert ist, einen Luft- und Dampfstrom aus dem Innenraum entweichen zu lassen;
eine Abluftleitung (218), die an einem ersten Ende außerhalb des Innenraums (202) mit dem Luftauslass (204) verbunden ist und dazu ausgebildet ist, den Luft- und Dampfstrom, der den Innenraum (202) über den Luftauslass (204) verlässt, zu leiten; einen Zyklon-Dampfabscheider (212), der dazu konfiguriert ist, den Wasser- und/oder Wasserdampfgehalt eines durch ihn strömenden Stroms feuchter Luft zu reduzieren, wobei der Zyklon-Dampfabscheider (212) einen Zyklon-Dampfabscheidereinlass (220) und einen Zyklon-Dampfabscheiderauslass (222) umfasst; wobei die Abluftleitung (218) an einem zweiten, dem ersten Ende gegenüberliegenden Ende mit dem Zyklon-Dampfabscheidereinlass (220) verbunden ist, der dazu konfiguriert ist, den von der Abluftleitung (218) geleiteten Luft- und Dampfstrom aufzunehmen, **dadurch gekennzeichnet, dass** der Ofen ferner umfasst
einen Abluftventilator (216), der dazu konfiguriert ist, unter Druck stehende Luft an einer Stelle zwischen dem Luftauslass (204) und dem Zyklon-Dampfabscheidereinlass (220) in die Abluftleitung (218) einzublasen;
wobei der Zyklon-Dampfabscheider (212) einen Wasserauslass (226) umfasst, der dazu konfiguriert ist, Wasser, das durch den Zyklon-Dampfabscheider (212) aus dem Luft- und Dampfstrom gesammelt wurde, aus dem Zyklon-Dampfabscheider (212) zu leiten; und wobei eine Wasserleitung (230) bereitgestellt ist, die an einem ersten Ende mit dem Wasserauslass (226) verbunden ist und dazu konfiguriert ist, Wasser von dem Wasserauslass (226) zu leiten; und
wobei an dem Innenraum (202) ein Wassereinlass (236) bereitgestellt ist, der dazu konfiguriert ist, Wasser in den Innenraum (202) eintreten zu lassen; und wobei die Wasserleitung (230) an einem zweiten Ende mit dem Wassereinlass (236) verbunden ist und dazu konfiguriert ist, Wasser über den Wassereinlass (236) in den Innenraum (202) zu leiten.

2. Der Ofen nach Anspruch 1, wobei ein Einwegventil zwischen der Stelle, an der unter Druck stehende Luft durch den Abluftventilator (216) in die Abluftleitung (218) eingeleitet wird, und dem Innenraum (202) angeordnet ist; wobei das Einwegventil dazu konfiguriert ist, den Luft- und Dampfstrom aus dem Innenraum (202) zum Zyklon-Dampfabscheider (212) zu ermöglichen und zu verhindern, dass Luft in den Innenraum (202) strömt.

3. Der Ofen nach Anspruch 1 oder 2, wobei ein Auslassventil (206) an der Abluftleitung (218) zwischen dem Luftauslass (204) und der Stelle des Einblasens von unter Druck stehender Luft in die Abluftleitung (218) durch den Abluftventilator (216) bereitgestellt ist; wobei das Auslassventil (206) dazu konfiguriert ist, den Luft- und Dampfstrom, der aus dem Innenraum (202) austritt, zu steuern.

4. Der Ofen nach einem der vorhergehenden Ansprüche, wobei der Ofen (200) einen Innenventilator (208), der innerhalb des Innenraums (202) angeordnet ist, und einen Hauptofenmotor (210), der außerhalb des Innenraums (202) angeordnet ist, umfasst; wobei der Innenventilator (208) mit dem Hauptofenmotor (210) verbunden und dazu konfiguriert ist, von diesem angetrieben zu werden.

5. Der Ofen nach einem der vorhergehenden Ansprüche, wobei der Abluftventilator (216) einen dedizierten Motor umfasst und dazu konfiguriert ist, von diesem angetrieben zu werden.

6. Der Ofen nach Anspruch 5, wobei der dedizierte Motor eine Elektronik umfasst und dazu konfiguriert ist, von dieser gesteuert zu werden, wobei die Elektronik dazu konfiguriert ist, die Betriebsleistung des Abluftventilators (216) auf der Grundlage von Informationen über die Strömungsgeschwindigkeit des Luft- und Dampfstroms anzupassen, der aus dem Innenraum (202) durch den Luftauslass (204) austritt.

7. Der Ofen nach Anspruch 4, wobei der Abluftventilator (216) mit dem Hauptofenmotor (210) verbunden und dazu konfiguriert ist, von diesem angetrieben zu werden.

8. Der Ofen nach einem der vorhergehenden Ansprüche, wobei an der Wasserleitung (230) an einer Stelle zwischen dem Wassereinlass (236) und dem Wasserauslass (226) ein Wasserrücklaufventil (234) bereitgestellt ist, das dazu konfiguriert ist, den Wasserstrom durch die Wasserleitung (230) in den Innenraum (202) zu steuern.

9. Der Ofen nach einem der vorhergehenden Ansprüche, wobei an der Wasserleitung (230) an einer Stelle zwischen dem Wassereinlass (236) und dem Wasserauslass (226) ein Wassersammelbehälter (232) bereitgestellt ist, der dazu konfiguriert ist, eine Wassermenge, die aus dem Zyklon-Dampfabscheider (212) stammt, zu sammeln und zu speichern.

10. Der Ofen nach einem der vorhergehenden Ansprüche, wobei der Ofen (200) eine Ofenelektronik (250) umfasst und der Abluftventilator (216) ferner dazu konfiguriert ist, einen Luftstrom über die Ofenelektronik (250) zu erzeugen, um die Ofenelektronik (250) zu kühlen.

11. Der Ofen nach einem der Ansprüche 1 bis 9, wobei der Ofen (200) eine Ofenelektronik (250) und einen Kühlventilator (260) umfasst; wobei der Kühlventilator (260) einen Kühlventilatorauslass (262) umfasst, der an einem ersten Ende mit dem Kühlventilator (260) und an einem zweiten Ende zwischen dem Luftauslass (204) und dem Zyklon-Dampfabscheider (212) mit der Abluftleitung (218) verbunden ist; wobei der Kühlventilatorauslass (262) dazu konfiguriert ist, unter Druck stehende Luft von dem Kühlventilator (260) zu der Abluftleitung (218) zwischen dem Luftauslass (204) und dem Zyklon-Dampfabscheider (212) zu leiten.

12. Ein Verfahren zum Betreiben des Ofens (200) nach Anspruch 1, umfassend:
Erhitzen und Bereitstellen von Feuchtigkeit für den Innenraum (202), sodass der Innenraum (202) ein Luft- und Dampfgemisch umfasst, das unter einem höheren Druck steht als der Druck der Umgebung außerhalb des Ofens;
Strömenlassen von Luft und Dampf aus dem Innenraum (202) in die Abluftleitung (218);
Einblasen unter Druck stehender Luft in den Luft- und Dampfstrom mittels des Abluftventilators (218); und
Reduzieren des Wasser- und/oder Wasserdampfgehalts des Luft- und Dampfstroms unter Verwendung des Zyklon-Dampfabscheiders (212); ferner umfassend:
Leiten des aus dem Luft- und Dampfstrom abgeschiedenen Wassers aus dem Zyklon-Dampfabscheider (212) in den Innenraum (202).

## Revendications

1. Four (200) destiné à être utilisé dans une cuisine d'aéronef, comprenant :
une cavité intérieure (202) configurée pour chauffer un ou plusieurs aliments, la cavité intérieure (202) comprenant une sortie d'air (204) configurée pour permettre à un flux d'air et de vapeur de s'échapper de la cavité intérieure ;
un conduit d'échappement (218) relié, à une première extrémité, à la sortie d'air (204) extérieure à la cavité intérieure (202) et configuré pour canaliser le flux d'air et de vapeur quittant la cavité intérieure (202) par la sortie d'air (204) ;
un séparateur de vapeur cyclonique (212) configuré pour réduire la teneur en eau et/ou en vapeur d'eau d'un flux d'air humide le traversant, le séparateur de vapeur cyclonique (212) comprenant une entrée de séparateur de vapeur cyclonique (220) et une sortie de séparateur de vapeur cyclonique (222) ; dans lequel le conduit d'échappement (218) est relié, à une seconde extrémité, opposée à la première extrémité, à l'entrée du séparateur de vapeur cyclonique (220), et est configuré pour recevoir le flux d'air et de vapeur canalisé par le conduit d'échappement (218), **caractérisé en ce que** le four comprend, en outre :
un ventilateur d'extraction (216) configuré pour injecter de l'air sous pression dans le conduit d'échappement (218) à un point situé entre la sortie d'air (204) et l'entrée du séparateur de vapeur cyclonique (220) ;
dans lequel le séparateur de vapeur cyclonique (212) comprend une sortie d'eau (226) configurée pour évacuer l'eau collectée par le flux d'air et de vapeur généré par le séparateur de vapeur cyclonique (212) hors du séparateur de vapeur cyclonique (212) ; et dans lequel un conduit d'eau (230) est prévu, relié, à une première extrémité, à la sortie d'eau (226) et configuré pour évacuer l'eau provenant de la sortie d'eau (226) ; et
dans lequel la cavité intérieure (202) est munie d'une entrée d'eau (236) configurée pour permettre à l'eau de pénétrer dans la cavité intérieure (202) ; et dans lequel le conduit d'eau (230) est relié, à une seconde extrémité, à l'entrée d'eau (236) et configuré pour acheminer l'eau dans la cavité intérieure (202) par l'entrée d'eau (236).

2. Four selon la revendication 1, dans lequel un clapet anti-retour est positionné entre le point d'injection d'air sous pression dans le conduit d'échappement (218) par le ventilateur d'extraction (216) et la cavité intérieure (202) ; dans lequel ledit clapet anti-retour est configuré pour permettre au flux d'air et de vapeur de circuler de la cavité intérieure (202) vers le séparateur de vapeur cyclonique (212) et pour empêcher l'air de pénétrer dans la cavité intérieure (202).

3. Four selon la revendication 1 ou 2, dans lequel une soupape de sortie (206) est prévue sur le conduit d'échappement (218) entre la sortie d'air (204) et le point d'injection d'air sous pression dans le conduit d'échappement (218) par le ventilateur d'extraction (216) ; dans lequel ladite soupape de sortie (206) est configurée pour contrôler le flux d'air et de vapeur sortant de la cavité intérieure (202).

4. Four selon une quelconque revendication précédente, dans lequel le four (200) comprend un ventilateur intérieur (208) disposé dans la cavité intérieure (202) et un moteur de four principal (210) disposé à l'extérieur de la cavité intérieure (202) ; dans lequel ledit ventilateur intérieur (208) est relié au moteur de four principal (210) et configuré pour être entraîné par celui-ci.

5. Four selon une quelconque revendication précédente, dans lequel le ventilateur d'extraction (216) comprend un moteur dédié et est configuré pour être entraîné par celui-ci.

6. Four selon la revendication 5, dans lequel le moteur dédié comprend et est configuré pour être commandé par une électronique configurée pour ajuster la puissance de fonctionnement du ventilateur d'extraction (216) en fonction des informations relatives à la vitesse du flux d'air et de vapeur sortant de la cavité intérieure (202) par l'entrée d'air (204).

7. Four selon la revendication 4, dans lequel le ventilateur d'extraction (216) est relié au moteur principal du four (210) et configuré pour être entraîné par celui-ci.

8. Four selon une quelconque revendication précédente, dans lequel, à un point situé entre l'entrée d'eau (236) et la sortie d'eau (226), le conduit d'eau (230) est muni d'une vanne de retour d'eau (234) configurée pour contrôler le débit d'eau à travers le conduit d'eau (230) dans la cavité intérieure (202).

9. Four selon une quelconque revendication précédente, dans lequel, à un point situé entre l'entrée d'eau (236) et la sortie d'eau (226), le conduit d'eau (230) est muni d'un réservoir de collecte d'eau (232) configuré pour collecter et stocker un volume d'eau provenant du séparateur de vapeur cyclonique (212).

10. Four selon une quelconque revendication précédente, dans lequel le four (200) comprend l'électronique du four (250) et le ventilateur d'extraction (216) est en outre configuré pour induire un flux d'air à travers ladite électronique du four (250) afin de refroidir ladite électronique du four (250).

11. Four selon l'une quelconque des revendications 1 à 9, dans lequel le four (200) comprend l'électronique du four (250) et un ventilateur de refroidissement (260) ; dans lequel le ventilateur de refroidissement (260) comprend une sortie de ventilateur de refroidissement (262) reliée à une première extrémité au ventilateur de refroidissement (260) et à une seconde extrémité au conduit d'échappement (218) entre la sortie d'air (204) et le séparateur de vapeur cyclonique (212) ; dans lequel ladite sortie de ventilateur de refroidissement (262) est configurée pour canaliser l'air sous pression du ventilateur de refroidissement (260) vers le conduit d'échappement (218) entre la sortie d'air (204) et le séparateur de vapeur cyclonique (212).

12. Procédé de fonctionnement du four (200) selon la revendication 1, comprenant :
le chauffage et l'humidification de la cavité intérieure (202) de sorte que la cavité intérieure (202) comprenne un mélange d'air et de vapeur à une pression supérieure à la pression de l'environnement extérieur au four ;
la possibilité à l'air et à la vapeur de s'écouler de la cavité intérieure (202) dans le conduit d'échappement (218) ;
l'injection, par le ventilateur d'extraction (218), de l'air sous pression dans le flux d'air et de vapeur ; et
la réduction, en utilisant le séparateur de vapeur cyclonique (212), de la teneur en eau et/ou en vapeur d'eau du flux d'air et de vapeur ; comprenant, en outre :
la canalisation de l'eau séparée du flux d'air et de vapeur du séparateur de vapeur cyclonique (212) dans la cavité intérieure (202).
